# NEUE EUROPÄISCHE PATENTSCHRIFT

(11) **EP 2 660 086 B2**
(45) Veröffentlichungstag und Bekanntmachung des Hinweises auf die Entscheidung über den Einspruch: **31.08.2022**
(45) Hinweis auf die Patenterteilung: 14.06.2017
(21) Anmeldenummer: 13000622.4
(22) Anmeldetag: 07.02.2013
(51) Int. Cl.: B60H 1/00

(54) **Kreislaufsystem für ein Nutzfahrzeug**
Circulation system for a commercial vehicle
Système de circuit pour véhicule utilitaire

(30) Priorität: 02.05.2012 DE 102012008878
(43) Veröffentlichungstag der Anmeldung: 06.11.2013
(73) Patentinhaber: MAN Truck & Bus SE, 80995 München (DE)
(72) Erfinder: Yildirim, Kemal-Edip, 82194 Gröbenzell (DE); Stephan, Andreas, 82194 Gröbenzell (DE); Bach, Sven, 85757 Karlsfeld (DE)
(74) Vertreter: v. Bezold & Partner Patentanwälte - PartG mbB

(56) Entgegenhaltungen:
- EP-A1- 1 623 857
- EP-A1- 1 961 593
- EP-A1- 2 437 005
- EP-A2- 1 447 249
- WO-A1-02/092368
- WO-A1-2009/146856
- WO-A1-2011/029538
- DE-A1- 10 006 513
- DE-A1-102008 047 753
- DE-A1-102010 000 990
- DE-A1-102010 024 775
- DE-C1- 19 536 972
- DE-C2- 19 535 782
- DE-U1-202007 011 617
- GABRIELE RAABE et al.: "Untersuchung eines CO2-Ejektorkreislaufs für Omnibusklimaanlagen", , 2011, Technische Universität Braunschweig
- Michael Sonnekalb: "Energieeffiziente Klimatisierung bei Bussen und Schienenfahrzeugen - Potenziale für eine erfolgreiche Übertragung ins KFZ?", 6. CTi-Forum ''Heiz- und Kühlsysteme im Kfz, 8 November 2011 (2011-11-08),

## Beschreibung

Die vorliegende Erfindung betrifft ein Kreislaufsystem für ein Nutzfahrzeug wie z.B. einen Lastkraftwagen oder einen Omnibus.

Die DE 10 2010 024 775 A1 offenbart eine Vorrichtung zur Klimatisierung von Fahrzeugen, bei welcher das Kältemittel in einem Wärmepumpenbetrieb die Verdichtungsenergie sowie die aus der Umgebung durch ein Umgebungsmodul und/oder aus dem Kühlmittel durch einen Fluid-Wärmeübertrager aufgenommene Wärme durch ein Innenraummodul in die Innenraumzuluft abgibt. Mit diesem System können Wärme- und Kälte nur in getrennten Moden genutzt werden, aber nicht zusammen in einem Modus. Die EP 1 623 857 A1, ähnlich wie die DE 10 2010 024 775 A1, offenbart ein HLK-System, das wahlweise im Kühlmodus und Wärmepumpenmodus betrieben werden kann. Mit diesem System können ebenfalls Wärme und Kälte nur in getrennten Moden genutzt werden. Die WO 02/092368 A1 offenbart eine Klimaanlage für ein Fahrzeug, bei welcher die Innenzuluft erst die Wärme zusammen mit der Entfeuchtungswärme an das Kältemittel abgibt, das Kältemittel diese Wärme zusammen mit der Verdichtungsenergie an das Kühlmittel über einen Koppelwärmetauscher zuführt und schließlich der Anteil der Wärme, die aus der Innenluftzufuhr aufgenommen wurde, wieder in die Innenluftzufuhr abgegeben wird. Damit verwendet die Innenluftzufuhr nur einen Bruchteil der nutzbaren Wärme. Zum allgemeinen Stand der Technik kann noch auf die DE 20 2007 011 617 U1 und die DE 195 36 972 C1 verwiesen werden.

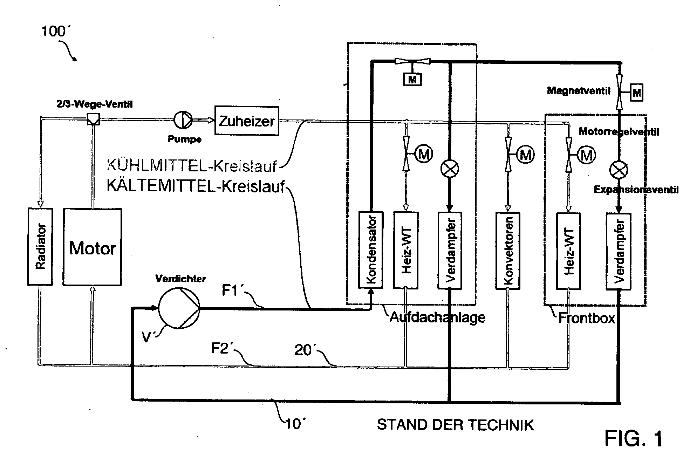

Figur 1 zeigt ein Kreislaufsystem 100' für ein Nutzfahrzeug gemäß Stand der Technik. Das Kreislaufsystem 100' umfasst einen ersten Kreislauf 10', der ein erstes Fluid F1' führt und der als sogenannter Kältemittel-Kreislauf ausgeführt ist, und einen zweiten Kreislauf 20', der ein zweites Fluid F2' führt und der als sogenannter Kühlmittel-Kreislauf ausgeführt ist.

Der erste Kreislauf 10' umfasst einen Kondensator/Gaskühler und einen Verdampfer, dem ein Expansionsventil vorgeschaltet ist. Der Kondensator/Gaskühler und der Verdampfer sind in einer Aufdachanlage des Nutzfahrzeugs angeordnet. Der erste Kreislauf 10' umfasst außerdem einen weiteren Verdampfer, dem ebenfalls ein Expansionsventil vorgeschaltet ist. Der weitere Verdampfer ist in einer Frontbox des Nutzfahrzeugs angeordnet. Der erste Kreislauf 10' umfasst ferner einen Verdichter V' und mehrere Ventile, z.B. mit dem Bezugszeichen M (im Viereck) versehene Magnetventile.

Der zweite Kreislauf 20' umfasst einen Heiz-Wärmetauscher (Heiz-WT), der in der Aufdachanlage des Nutzfahrzeugs angeordnet ist, und einen Heiz-Wärmetauscher (Heiz-WT), der in der Frontbox des Nutzfahrzeugs angeordnet ist. Der zweite Kreislauf 20' umfasst außerdem zumindest einen Konvektor und/oder Heizgerät, einen Zuheizer, einen Radiator, eine Pumpe und mehrere Ventile, z.B. mit dem Bezugszeichen M (im Kreis) versehene Regelventile, ein 2/3-Wege-Ventil, etc. Der zweite Kreislauf 20' steht mit einem Motor des Nutzfahrzeugs in Wirkverbindung.

Nachfolgend werden einige an dem Kreislaufsystem 100' des Stands der Technik auftretende Nachteile beschrieben. So kann z.B. im Heiz- und/oder Reheat-Modus die Kondensationswärme und/oder die Wärme des ersten Fluids F1' des ersten Kreislaufs 10' nicht genutzt werden. Das zusätzliche Heizen z.B. einer Fahrgastkabine eines Omnibusses und/oder eine Motorvorwärmung mittels Zuheizer (mit Brennstoff und/oder elektrisch) erfordert einen hohen Energieverbrauch aufgrund COP (Coefficient of Performance) < 1, was gerade bei Hybrid- und/oder Elektrofahrzeugen oder allgemein Fahrzeugen mit optimierten Motoren ein Problem darstellt. Ein weiterer Nachteil ist, dass im Heiz-Modus die Verdampfer in der Aufdachanlage und der Frontbox als Kondensator/Gaskühler und der Kondensator/Gaskühler in der Aufdachanlage als Verdampfer durch die entsprechenden Schaltungen wirken. Beim Umschalten vom Kühl- und/oder Reheat-Modus in den Heiz-Modus kann durch kondensiertes Wasser der sogenannte Fog-Effekt entstehen. Des Weiteren können die Aufdachanlage und die Frontbox in unterschiedlichen Modi die Kondenswärme und/oder die Wärme des ersten Fluids F1' des ersten Kreislaufs 10' auch durch die entsprechende Schaltungen nicht nutzen. Außerdem kann z.B. ein Abtauen des Kondensators/Gaskühlers in der Aufdachanlage erforderlich werden, was üblicherweise nicht durch das Kreislaufsystem 100' an sich erfolgt, sondern z.B. über vorzugsweise elektrische Zusatzkomponenten.

Eine Aufgabe der Erfindung ist es, ein alternatives und/oder verbessertes Kreislaufsystem für ein Nutzfahrzeug zu schaffen.

Diese Aufgabe wird insbesondere mit den Merkmalen des Hauptanspruchs gelöst. Vorteilhafte Weiterbildungen sind den Unteransprüchen zu entnehmen.

Die Erfindung schafft insbesondere ein Kreislaufsystem für ein Nutzfahrzeug mit einem ersten Kreislauf, der ein erstes Fluid führt und der ein Kältekreislauf (auch: Kältemittelkreislauf) ist, und einem zweiten Kreislauf, der ein zweites Fluid führt und der ein Heizkreislauf (auch: Kühlmittelkreislauf) ist.

Das erfindungsgemäße Kreislaufsystem zeichnet sich insbesondere dadurch aus, dass ein Wärmetauscher bereitgestellt ist, dem in Abhängigkeit der Kreislaufsystem-Modi das erste Fluid zuführbar ist, um eine Wärmetauschverbindung mit dem zweiten Kreislauf zu realisieren, und zweckmäßig nicht zuführbar ist, um die Wärmetauschverbindung mit dem zweiten Kreislauf zu verhindern. Das Kreislaufsystem umfasst also vorzugsweise zumindest einen Modus, in dem das erste Fluid dem Wärmetauscher zugeführt wird, und/oder zumindest einen Modus, in dem das erste Fluid dem Wärmetauscher nicht zugeführt wird, insbesondere den Wärmetauscher umgeht. Optional ergänzend zeichnet sich das erfindungsgemäße Kreislaufsystem insbesondere dadurch aus, dass der erste Kreislauf ein Expansionsorgan umfasst, dem in Abhängigkeit der Kreislaufsystem-Modi das erste Fluid zuführbar ist, um das erste Fluid expansionsorganbeaufschlagt einem weiteren Wärmetauscher zuzuführen, und vorzugsweise nicht zuführbar ist, um das erste Fluid unter Umgehung des Expansionsorgans dem weiteren Wärmetauscher zuzuführen. Das Kreislaufsystem umfasst also vorzugsweise zumindest einen Modus, in dem das erste Fluid dem Expansionsorgan zugeführt wird, und/oder zumindest einen Modus, in dem das erste Fluid dem Expansionsorgan nicht zugeführt wird, insbesondere das Expansionsorgan umgeht.

Das erfindungsgemäße Kreislaufsystem kann z.B. den Vorteil aufweisen, dass es die Kondensationswärme und/oder die Wärme des ersten Fluids aus dem ersten Kreislauf mit einem hohen COP (z.B. ungefähr 3,5-4,5) in Abhängigkeit der Außentemperatur beim Heizen oberhalb der Vereisungstemperatur des Wärmetauschers nutzen kann. Ein weiterer vorzugsweise realisierbarer Vorteil ist, dass auf übliche Kreislaufsysteme (z.B. das in Figur 1 gezeigte Kreislaufsystem) in großen Teilen zurückgegriffen werden kann, so dass z.B. wenig Änderungen in der Aufdachanlage und keine oder ebenfalls nur wenige Änderungen in der Frontbox erforderlich sind, um das erfindungsgemäße Kreislaufsystem zu verwirklichen.

Die Kondensationswärme und/oder die Wärme des ersten Fluids wird auch in unterschiedlichen Modi der Aufdachanlage und der Frontbox genutzt. Ein weiterer vorzugsweise zu erzielender Vorteil ist, dass der Wärmetauscher, insbesondere wenn er im Heiz-Modus als Kondensator/Gaskühler wirkt, über das Kreislaufsystem abtaubar ist, zweckmäßig ohne dass z.B. elektrische Zusatzkomponenten dafür erforderlich wären.

Es ist möglich, dass eine erste Einstelleinrichtung vorgesehen ist, um das erste Fluid zu dem Wärmetauscher zu leiten oder um das erste Fluid so zu leiten, dass es den Wärmetauscher umgeht.

Ferner ist es möglich, dass eine zweite Einstelleinrichtung vorgesehen ist, um das erste Fluid zu dem Expansionsorgan zu leiten oder um das erste Fluid so zu leiten, dass es das Expansionsorgan umgeht.

Vorzugsweise umfasst der erste Kreislauf zumindest einen Verdampfer, vorzugsweise zumindest zwei Verdampfer. Insbesondere kann der erste Kreislauf zwei oder mehr als zwei parallel-geschaltete Verdampfer umfassen.

Es ist möglich, dass eine dritte Einstelleinrichtung vorgesehen ist, um das erste Fluid zu dem zumindest einen Verdampfer zu leiten oder um das erste Fluid so zu leiten, dass es den zumindest einen Verdampfer umgeht.

Die erste, zweite und/oder dritte Einstelleinrichtung ist vorzugsweise als Ventileinrichtung ausgeführt, vorzugsweise als 2/3-Wege-Ventil. Die Einstelleinrichtung(en) kann über die Klimasteuerung gesteuert werden, womit im Rahmen der Erfindung auch z.B. eine Regelung umfasst ist.

Es ist möglich, dass der Wärmetauscher stromabwärts eines Verdichters angeordnet ist und/oder das Expansionsorgan stromabwärts des Wärmetauschers angeordnet ist und/oder der weitere Wärmetauscher stromabwärts des Expansionsorgans angeordnet ist.

Es ist möglich, dass in einem Kreislaufsystem-Modus, insbesondere einem Heiz-Modus, das erste Fluid dem Wärmetauscher zugeführt wird, dem Expansionsorgan zugeführt wird und den zumindest einen Verdampfer umgeht.

Es ist möglich, dass in einem Kreislaufsystem-Modus, insbesondere einem Reheat-Modus, das erste Fluid dem Wärmetauscher zugeführt wird, das Expansionsorgan umgeht und dem zumindest einen Verdampfer zugeführt wird.

Es ist möglich, dass in einem Kreislaufsystem-Modus, insbesondere einem Abtau-Modus, das erste Fluid den Wärmetauscher umgeht, dem Expansionsorgan zugeführt wird und den zumindest einen Verdampfer umgeht.

Es ist möglich, dass in einem Kreislaufsystem-Modus, insbesondere einem Heiz- und Abtau-Modus, das erste Fluid dem Wärmetauscher zugeführt wird, dem Expansionsorgan zugeführt wird und den zumindest einen Verdampfer umgeht.

Es ist möglich, dass in einem Kreislaufsystem-Modus, insbesondere einem Kühl-Modus, das erste Fluid den Wärmetauscher umgeht, das Expansionsorgan umgeht und dem zumindest einen Verdampfer zugeführt wird.

Vorzugsweise wird das erste Fluid in dem jeweiligen Kreislaufsystem-Modus auch dem weiteren Wärmetauscher zugeführt. Vorzugsweise wird das erste Fluid dem weiteren Wärmetauscher zugeführt und zwar unabhängig von den Kreislaufsystem-Modi.

Es ist möglich, dass die Kondensationswärme und/oder die Wärme des ersten Fluids aus dem ersten Kreislauf für den Reheat-Modus und/oder für den Heiz-Modus und/oder für den Heiz- und Abtau-Modus zweckmäßig mittels des Wärmetauschers genutzt wird, insbesondere z.B. in Abhängigkeit der Außentemperatur im Heiz-Modus oder allgemein einem Heizen oberhalb der Vereisungstemperatur des weiteren Wärmetauschers.

Das Kreislaufsystem steht mit einer Aufdachanlage und einer Frontbox des Nutzfahrzeugs in Wirkverbindung. Es ist möglich, die Kondenswärme und/oder die Wärme des ersten Fluids aus dem ersten Kreislauf in unterschiedlichen Modi der Aufdachanlage und der Frontbox zu nutzen, wie z.B. Kühl-Modus / Heiz-Modus, Kühl-Modus / Reheat-Modus und/oder Heiz-Modus / Reheat-Modus. Vorzugsweise kann die Kondenswärme und/oder die Wärme des ersten Fluids z.B. auch für die Motor-Vorwärmung genutzt werden.

Es ist möglich, dass der Wärmetauscher in Abhängigkeit des Kreislaufsystem-Modus als Kondensator/Gaskühler wirkt, vorzugsweise im Heiz-Modus, im Reheat-Modus und/oder im Heiz- und Abtau-Modus. Alternativ oder ergänzend kann der weitere Wärmetauscher in Abhängigkeit des Kreislaufsystem-Modus als Verdampfer oder Kondensator/Gaskühler wirken, vorzugsweise im Heiz-Modus als Verdampfer, im Reheat-Modus als Verdampfer, im Abtau-Modus als Kondensator/Gaskühler, im Heiz- und Abtau-Modus als Kondensator/Gaskühler und/oder im Kühl-Modus als Kondensator/Gaskühler.

Im Heiz- und Abtau-Modus ist es somit möglich, dass der Wärmetauscher als erster Kondensator/Gaskühler wirkt und der weitere Wärmetauscher als zweiter Kondensator/Gaskühler wirkt.

Mit "Kondensator/Gaskühler" ist vorzugsweise eine als "Kondensator und/oder Gaskühler" wirkbare Wärmetauscheinrichtung umfasst.

Der zumindest eine Verdampfer ist vorzugsweise als reiner Verdampfer ausgeführt. Beim Umschalten vom Kühl- und/oder Reheat-Modus in den Heiz-Modus kann dadurch z.B. der durch kondensiertes Wasser hervorgerufene Fog-Effekt vermieden werden.

Vorzugsweise ist der Wärmetauscher ein Platten-Wärmetauscher.

Der weitere Wärmetauscher ist vorzugsweise ein Außen-Wärmetauscher und/oder konfiguriert, um die Wärme direkt mit der Luft oder mit einem weiteren Fluid nach Außen auszutauschen.

Der weitere Wärmetauscher ist vorzugsweise in einer Aufdachanlage für das Nutzfahrzeug angeordnet und einer der Verdampfer ist ebenfalls vorzugsweise in der Aufdachanlage angeordnet, während ein anderer der Verdampfer z.B. in einer Frontbox für das Nutzfahrzeug angeordnet sein kann. In der Aufdachanlage kann außerdem ein Wärmetauscher (z.B. Heiz-Wärmetauscher) des zweiten Kreislaufs angeordnet sein. Außerdem kann in der Frontbox ein Wärmetauscher (z.B. ein Heiz-Wärmetauscher) des zweiten Kreislaufs angeordnet sein.

Zu erwähnen ist, dass das erfindungsgemäße Kreislaufsystem vorzugsweise ein spezielles Luft/Kühlmittel-Wärmepumpensystem für die Klimatisierung von Nutzfahrzeugen schafft, während bekannte Systeme üblicherweise ein Luft/Luft-Wärmepumpensystem für die Klimatisierung der Nutzfahrzeuge realisieren oder vorschlagen.

Zu erwähnen ist außerdem, dass das erfindungsgemäße Kreislaufsystem insbesondere für Nutzfahrzeuge mit Diesel- und/oder Hybridantrieb konfiguriert ist.

Zu erwähnen ist auch, dass der zweite Kreislauf vorzugsweise mit einem Motor des Nutzfahrzeugs in Wirkverbindung steht, was z.B. zusätzlich auch vorteilhaft für dessen Vorwärmung zur Reduzierung des Verbrauchs und/oder der Emission ist.

Die vorstehend beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Fig. 1: zeigt ein Kreislaufsystem für ein Nutzfahrzeug gemäß Stand der Technik,
- Fig. 2: zeigt ein Kreislaufsystem für ein Nutzfahrzeug gemäß einer Ausführungsform der Erfindung,
- Fig. 3: zeigt das Kreislaufsystem der Fig. 2 in einem Kühl-Modus,
- Fig. 4: zeigt das Kreislaufsystem der Fig. 2 in einem Heiz-Modus,
- Fig. 5: zeigt das Kreislaufsystem der Fig. 2 in einem Reheat-Modus,
- Fig. 6: zeigt das Kreislaufsystem der Fig. 2 in einem Abtau-Modus, und
- Fig. 7: zeigt das Kreislaufsystem der Fig. 2 in einem Heiz- und Abtau-Modus.

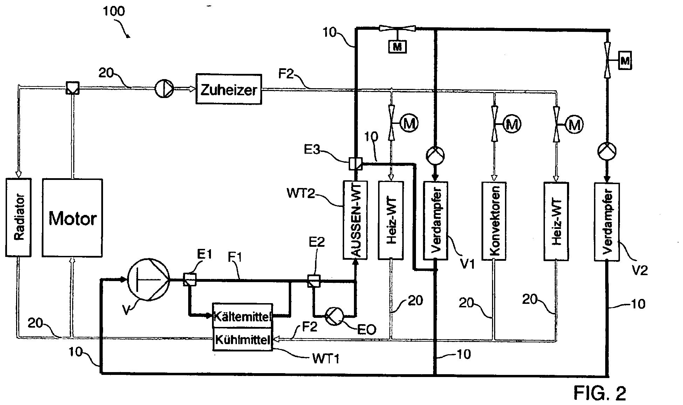

Figur 2 zeigt ein Kreislaufsystem 100 für ein Nutzfahrzeug gemäß einer Ausführungsform der Erfindung. Das Kreislaufsystem 100 umfasst einen ersten Kreislauf 10, der ein erstes Fluid F1 führt und als Kältekreislauf ausgeführt ist, und einen zweiten Kreislauf 20, der ein zweites Fluid F2 führt und als Heizkreislauf ausgeführt ist.

Der zweite Kreislauf 20 umfasst z.B. einen Radiator, eine Pumpe, einen Zuheizer, einen Heiz-Wärmetauscher (Heiz-WT), der vorzugsweise in einer Aufdachanlage des Nutzfahrzeugs angeordnet ist, vorzugsweise mehrere Konvektoren und/oder Heizgeräte, und einen weiteren Heiz-Wärmetauscher (Heiz-WT), der vorzugsweise in einer Frontbox des Nutzfahrzeugs angeordnet ist. Der zweite Kreislauf 20 steht mit einem Motor, z.B. einem Hybrid- und/oder Elektromotor des Nutzfahrzeugs in Wirkverbindung. Der zweite Heizkreislauf 20 umfasst außerdem mehrere Ventile, z.B. mit dem Bezugszeichen M versehene Regelventile, ein 2/3-Wege-Ventil, etc.. Wie ein Vergleich der Figuren 1 und 2 zeigt, kann der zweite Kreislauf 20 ähnlich oder sogar zumindest in großen Teilen baugleich ausgeführt sein wie der zweite Kreislauf 20' des Kreislaufsystems 100'.

Eine Besonderheit des erfindungsgemäßen Kreislaufsystems 100 ist insbesondere die Ausbildung des ersten Kreislaufs 10 und/oder die in Abhängigkeit der Kreislaufsystem-Modi herstellbare und trennbare Wirkverbindung zwischen dem ersten Kreislauf 10 und dem zweiten Kreislauf 20, zweckmäßig über einen Wärmetauscher WT1.

Dem Wärmetauscher WT1 kann in Abhängigkeit der Kreislaufsystem-Modi das erste Fluid F1 zugeführt werden, um eine Wärmetauschverbindung mit dem zweiten Kreislauf 20 zu realisieren, und in Abhängigkeit der Kreislaufsystem-Modi nicht zugeführt werden, um die Wärmetauschverbindung mit dem zweiten Kreislauf 20 zu verhindern.

Eine weitere Besonderheit des erfindungsgemäßen Kreislaufsystems ist insbesondere ein Expansionsorgan EO. Dem Expansionsorgan EO kann in Abhängigkeit der Kreislaufsystem-Modi das erste Fluid F1 zugeführt werden, um das erste Fluid F1 expansionsorganbeaufschlagt einem weiteren Wärmetauscher WT2 zuzuführen, und in Abhängigkeit der Kreislaufsystem-Modi nicht zugeführt werden, um das erste Fluid F1 unter Umgehung des Expansionsorgans EO dem weiteren Wärmetauscher WT2 zuzuführen.

Der erste Kreislauf 10 umfasst eine erste Einstelleinrichtung E1, um das erste Fluid F1 zu dem Wärmetauscher WT1 zu leiten oder um das erste Fluid F1 so zu leiten, dass es den Wärmetauscher WT1 umgeht.

Der erste Kreislauf 10 umfasst außerdem eine zweite Einstelleinrichtung E2, um das erste Fluid F1 zu dem Expansionsorgan EO zu leiten oder um das erste Fluid F1 so zu leiten, dass es das Expansionsorgan EO umgeht.

Der erste Kreislauf 10 umfasst außerdem einen Verdampfer V1, der zweckmäßig in der Aufdachanlage des Nutzfahrzeugs angeordnet ist, und ferner einen weiteren Verdampfer V2, der vorzugsweise in der Frontbox des Nutzfahrzeugs angeordnet ist. Die Verdampfer V1 und V2 sind parallel-geschaltet. Der erste Kreislauf 10 kann optional weitere Verdampfer umfassen.

Der erste Kreislauf 10 umfasst eine dritte Einstelleinrichtung E3, um das erste Fluid F1 zu den Verdampfern V1, V2 zu leiten oder um das erste Fluid F1 so zu leiten, dass es die Verdampfer V1, V2 umgeht.

Die erste, zweite und dritte Einstelleinrichtung E1, E2, E3 sind als 2/3-Wege-Ventil ausgeführt.

Der Wärmetauscher WT1 ist stromabwärts eines ebenfalls von dem ersten Kreislauf 10 umfassten Verdichters V angeordnet und das Expansionsorgan EO ist stromabwärts des Wärmetauschers WT1 angeordnet und der weitere Wärmetauscher WT2 ist stromabwärts des Expansionsorgans EO angeordnet. Die Verdampfer V1, V2 sind stromabwärts des weiteren Wärmetauschers WT2 angeordnet.

Der Wärmetauscher WT1 ist vorzugsweise als Platten-Wärmetauscher ausgeführt. Der weitere Wärmetauscher WT2 ist vorzugsweise als Außen-Wärmetauscher ausgeführt, der Wärme direkt mit der Luft oder indirekt mit einem weiteren Fluid nach Außen austauscht.

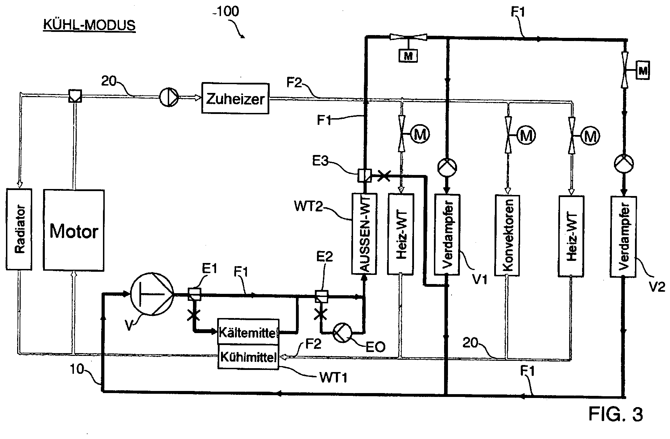

Figur 3 zeigt das Kreislaufsystem 100 der Figur 2 in einem Kühl-Modus. In dem Kühlmodus umgeht das erste Fluid F1 den Wärmetauscher WT1, es umgeht das Expansionsorgan EO und wird den Verdampfern V1, V2 zugeführt.

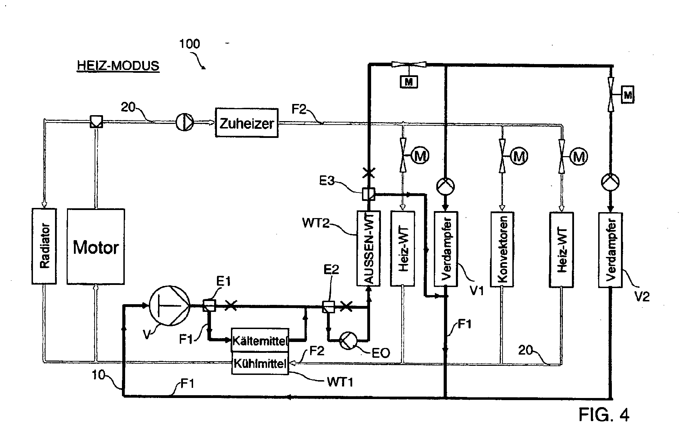

Figur 4 zeigt das Kreislaufsystem 100 der Figur 2 in einem Heiz-Modus. In dem Heiz-Modus wird das erste Fluid F1 dem Wärmetauscher WT1 zugeführt, dem Expansionsorgan EO zugeführt und umgeht die Verdampfer V1, V2.

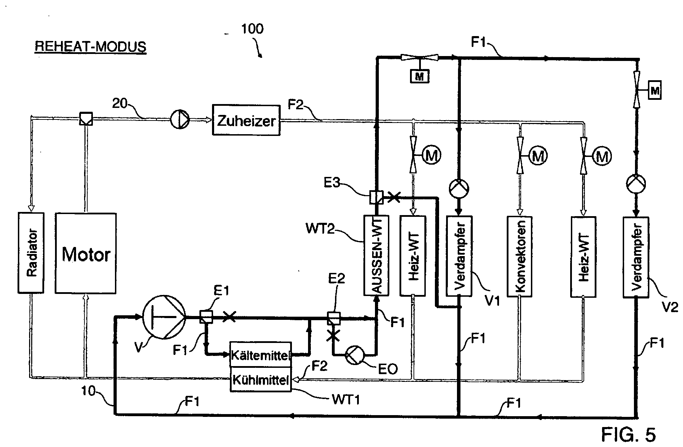

Figur 5 zeigt das Kreislaufsystem 100 der Figur 2 in einem Reheat-Modus. In dem Reheat-Modus wird das erste Fluid F1 dem Wärmetauscher WT1 zugeführt, es umgeht das Expansionsorgan EO und wird den Verdampfern V1, V2 zugeführt.

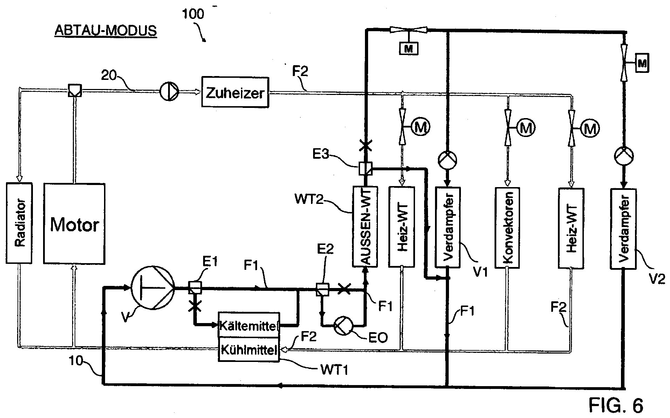

Figur 6 zeigt das Kreislaufsystem 100 der Figur 2 in einem Abtau-Modus. In dem Abtau-Modus umgeht das erste Fluid F1 den Wärmetauscher WT1, wird dem Expansionsorgan EO zugeführt und umgeht die Verdampfer V1, V2.

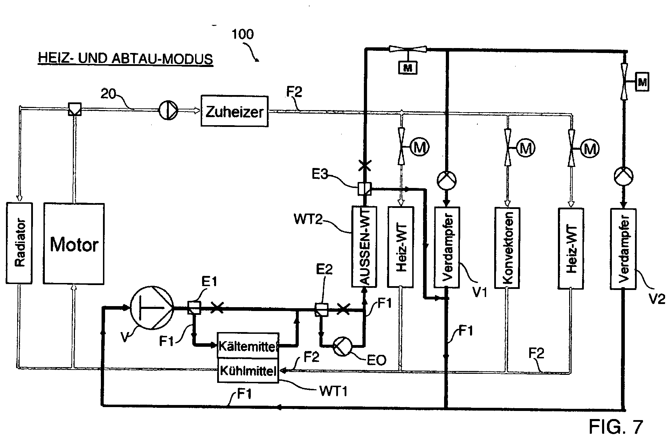

Figur 7 zeigt das Kreislaufsystem 100 der Figur 2 in einem Heiz- und Abtau-Modus. In dem Heiz- und Abtau-Modus wird das erste Fluid F1 dem Wärmetauscher WT1 zugeführt, wird dem Expansionsorgan EO zugeführt und umgeht die Verdampfer V1, V2.

Wie ein Vergleich der Figuren 3-7 zeigt, wird das erste Fluid F1 vorzugsweise in allen Kreislaufsystem-Modi dem weiteren Wärmetauscher WT2 zugeführt. Zu erwähnen ist, dass im Reheat-Modus optional ein teilweiser Austausch der Verdampfungsenergie durch die Regelung der zugehörigen Gebläse erfolgen kann oder aber kein Austausch stattfindet.

Mittels des Wärmetauschers WT1 wird ermöglicht, dass die Kondensationswärme und/oder die Wärme des ersten Fluids F1, die dem ersten Kreislauf 10 entstammen, für den Reheat-Modus, den Heiz-Modus und den Heiz- und Abtau-Modus nutzbar sind. Das kann z.B. in Abhängigkeit der Außentemperatur beim Heizen oberhalb der Vereisungstemperatur des weiteren Wärmetauschers WT2 erfolgen.

Der Wärmetauscher WT1 wirkt im Heiz-Modus, im Reheat-Modus und im Heiz- und Abtau-Modus als Kondensator und/oder Gaskühler. Der weitere Wärmetauscher WT2 wirkt im Heiz-Modus und optional im Reheat-Modus als Verdampfer und im Abtau-Modus, im Heiz- und Abtau-Modus und im Kühl-Modus als Kondensator und/oder Gaskühler. Daraus ergibt sich, dass der Wärmetauscher WT1 im Heiz- und Abtau-Modus als erster Kondensator/Gaskühler wirken kann und der weitere Wärmetauscher WT2 als zweiter Kondensator/Gaskühler. Die Verdampfer V1, V2 sind hingegen vorzugsweise als reine Verdampfer ausgeführt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Ansprüchen und Merkmalen.

## Patentansprüche

1. Kreislaufsystem für ein Nutzfahrzeug, umfassend:
- einen ersten Kreislauf (10), der ein erstes Fluid (F1) führt und der ein Kältekreislauf ist, und
- einen zweiten Kreislauf (20), der ein zweites Fluid (F2) führt und der ein Heizkreislauf ist,
wobei
- ein Wärmetauscher (WT1) vorgesehen ist, dem in Abhängigkeit der Kreislaufsystem-Modi das erste Fluid (F1) zuführbar ist, um eine Wärmetauschverbindung mit dem zweiten Kreislauf (20) zu realisieren, und nicht zuführbar ist, um die Wärmetauschverbindung mit dem zweiten Kreislauf (20) zu verhindern, und der Wärmetauscher (WT1) in Abhängigkeit des Kreislaufsystem-Modus als Kondensator/Gaskühler wirkt, zumindest im Reheat-Modus, und
wobei das Kreislaufsystem mit einer Aufdachanlage und einer Frontbox des Nutzfahrzeugs in Wirkverbindung steht zur Nutzung einer Kondenswärme und/oder einer Wärme des ersten Fluids (F1) aus dem ersten Kreislauf (10) in unterschiedlichen Modi der Aufdachanlage und der Frontbox, nämlich Kühl-Modus / Heiz-Modus, Kühl-Modus / Reheat-Modus und/oder Heiz-Modus / Reheat-Modus.

2. Kreislaufsystem nach Anspruch 1, **dadurch gekennzeichnet, dass** eine erste Einstelleinrichtung (E1) vorgesehen ist, um das erste Fluid (F1) zu dem Wärmetauscher (WT1) zu leiten oder um das erste Fluid (F1) so zu leiten, dass es den Wärmetauscher (WT1) umgeht.

3. Kreislaufsystem nach einem der vorhergehenden Ansprüche, **dadurch gekennzeichnet, dass** der erste Kreislauf (10) zumindest einen Verdampfer (V1, V2) umfasst, vorzugsweise zwei oder mehr als zwei parallel-geschaltete Verdampfer (V1, V2).

4. Kreislaufsystem nach Anspruch 3, **dadurch gekennzeichnet, dass** eine dritte Einstelleinrichtung (E3) vorgesehen ist, um das erste Fluid (F1) zu dem zumindest einen Verdampfer (V1, V2) zu leiten oder um das erste Fluid (F1) so zu leiten, dass es den zumindest einen Verdampfer (V1, V2) umgeht.

5. Kreislaufsystem nach einem der vorhergehenden Ansprüche, **dadurch gekennzeichnet, dass** die Kondenswärme und/oder die Wärme des ersten Fluids (F1) für eine Motor-Vorwärmung nutzbar ist.

6. Kreislaufsystem nach einem der vorhergehenden Ansprüche, **dadurch gekennzeichnet, dass** die Kondensationswärme und/oder die Wärme des ersten Fluids (F1) aus dem ersten Kreislauf (10) für den Reheat-Modus und/oder für den Heiz-Modus und/oder für den Heiz- und Abtau-Modus mit Hilfe des Wärmetauschers (WT1) nutzbar ist.

7. Kreislaufsystem nach einem der vorhergehenden Ansprüche, **dadurch gekennzeichnet, dass**
- der Wärmetauscher (WT1) in Abhängigkeit des Kreislaufsystem-Modus als Kondensator/Gaskühler wirkt, nämlich im Heiz-Modus, und/oder im Heiz- und Abtau-Modus.

8. Kreislaufsystem nach einem der Ansprüche 3 bis 7, **dadurch gekennzeichnet, dass** der zumindest eine Verdampfer (V1, V2) als reiner Verdampfer ausgeführt ist.

9. Kreislaufsystem nach einem der vorgehenden Ansprüche, **dadurch gekennzeichnet, dass** der Wärmetauscher (WT1) ein Platten-Wärmetauscher ist.

## Claims

1. Circuit system for a commercial vehicle, comprising:
- a first circuit (10), which carries a first fluid (F1) and is a refrigerating circuit, and
- a second circuit (20), which carries a second fluid (F2) and is a heating circuit,
wherein
- a heat exchanger (WT1) is provided, to which the first fluid (F1) can be fed in accordance with the circuit system modes in order to provide a heat exchanging connection to the second circuit (20), and to which it is possible not to feed the first fluid (F1) in order to prevent the heat exchanging connection to the second circuit (20), and, depending on the circuit system mode, the heat exchanger (WT1) acts as a condenser/gas cooler, at least in the reheat mode, and
wherein the circuit system is operatively connected to a roof-mounted unit and a front box of the commercial vehicle for use of heat of condensation and/or heat of the first fluid (F1) from the first circuit (10) in different modes of the roof-mounted unit and of the front box, namely the cooling mode/heating mode, cooling mode/reheat mode and/or heating mode/reheat mode.

2. Circuit system according to Claim 1, **characterized in that** a first setting device (E1) is provided in order to direct the first fluid (F1) to the heat exchanger (WT1) or in order to direct the first fluid (F1) in such a way that it bypasses the heat exchanger (WT1) .

3. Circuit system according to one of the preceding claims, **characterized in that** the first circuit (10) comprises at least one evaporator (V1, V2), preferably two or more than two evaporators (V1, V2) connected in parallel.

4. Circuit system according to Claim 3, **characterized in that** a third setting device (E3) is provided in order to direct the first fluid (F1) to the at least one evaporator (V1, V2) or in order to direct the first fluid (F1) in such a way that it bypasses the at least one evaporator (V1, V2).

5. Circuit system according to one of the preceding claims, **characterized in that** the heat of condensation and/or the heat of the first fluid (F1) can be used for engine preheating.

6. Circuit system according to one of the preceding claims, **characterized in that** the heat of condensation and/or the heat of the first fluid (F1) from the first circuit (10) can be used for the reheat mode and/or for the heating mode and/or for the heating and thawing mode with the aid of the heat exchanger (WT1).

7. Circuit system according to one of the preceding claims, **characterized in that**
- depending on the circuit system mode, the heat exchanger (WT1) acts as a condenser/gas cooler, namely in the heating mode, and/or in the heating and thawing mode.

8. Circuit system according to one of Claims 3 to 7, **characterized in that** the at least one evaporator (V1, V2) is embodied purely as an evaporator.

9. Circuit system according to one of the preceding claims, **characterized in that** the heat exchanger (WT1) is a plate heat exchanger.

## Revendications

1. Système de circuits destiné à un véhicule utilitaire, ledit système comprenant :
- un premier circuit (10) qui conduit un premier fluide (F1) et qui est un circuit frigorifique, et
- un deuxième circuit (20) qui conduit un deuxième fluide (F2) et qui est un circuit de chauffage,
- un échangeur de chaleur (WT1) étant prévu auquel, en fonction des modes du système de circuits, le premier fluide (F1) peut être amené afin d'établir une liaison d'échange de chaleur avec le deuxième circuit (20), et ne peut pas être amené afin d'empêcher la liaison d'échange de chaleur avec le deuxième circuit (20) et l'échangeur de chaleur (WT1) agissant comme un condenseur/refroidisseur de gaz en fonction du mode du système de circuits, au moins dans le mode réchauffage, et
le système de circuits étant fonctionnellement relié à une installation de toit et à un boîtier avant du véhicule utilitaire afin d'utiliser la chaleur de condensation et/ou de la chaleur du premier fluide (F1) du premier circuit (10) dans différents modes de l'installation de toit et du boîtier avant, à savoir mode refroidissement/mode chauffage, mode refroidissement/mode réchauffage et/ou mode chauffage/mode réchauffage.

2. Système de circuits selon la revendication 1, **caractérisé en ce qu'**un premier dispositif de réglage (E1) est prévu pour conduire le premier fluide (F1) vers l'échangeur de chaleur (WT1) ou pour conduire le premier fluide (F1) de façon à contourner l'échangeur de chaleur (WT1).

3. Système de circuits selon l'une des revendications précédentes, **caractérisé en ce que** le premier circuit (10) comprend au moins un évaporateur (V1, V2), de préférence deux ou plus de deux évaporateurs (V1, V2) montés en parallèle.

4. Système de circuits selon la revendication 3, **caractérisé en ce qu'**un troisième dispositif de réglage (E3) est prévu pour conduire le premier fluide (F1) vers l'au moins un évaporateur (V1, V2) ou pour conduire le premier fluide (F1) de façon à contourner l'au moins un évaporateur (V1, V2).

5. Système de circuits selon l'une des revendications précédentes, **caractérisé en ce que** la chaleur de condensation et/ou la chaleur du premier fluide (F1) peuvent être utilisées pour préchauffer le moteur.

6. Système de circuits selon l'une des revendications précédentes, **caractérisé en ce que** la chaleur de condensation et/ou la chaleur du premier fluide (F1) du premier circuit (10) peuvent être utilisées pour le mode réchauffage et/ou pour le mode chauffage et/ou pour le mode chauffage et dégivrage à l'aide de l'échangeur de chaleur (WT1).

7. Système de circuits selon l'une des revendications précédentes, **caractérisé en ce que**
- l'échangeur de chaleur (WT1) agit comme condenseur/refroidisseur de gaz en fonction du mode du système de circuits, à savoir le mode chauffage et/ou le mode chauffage et dégivrage.

8. Système de circuits selon l'une des revendications 3 à 7, **caractérisé en ce que** l' au moins un évaporateur (V1, V2) est conçu comme un évaporateur pur.

9. Système de circuits selon l'une des revendications précédentes, **caractérisé en ce que** l'échangeur de chaleur (WT1) est un échangeur de chaleur à plaques.
